(19) **Europäisches Patentamt**
**European Patent Office**
**Office européen des brevets**

(11) **EP 4 451 742 A1**

(12) **EUROPEAN PATENT APPLICATION**

(43) Date of publication:
**23.10.2024 Bulletin 2024/43**

(21) Application number: **23168422.6**

(22) Date of filing: **18.04.2023**

(51) International Patent Classification (IPC):
**H04W 40/20** (2009.01)    **H04W 24/02** (2009.01)
**H04W 36/38** (2009.01)    **H04W 36/08** (2009.01)

(52) Cooperative Patent Classification (CPC):
**G05D 1/229; G05D 1/225; G05D 1/6445;**
**G05D 1/6987;** G05D 2105/28; G05D 2107/70;
G05D 2109/10; H04W 24/02; H04W 36/087;
H04W 36/38

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Martinez Alba, Alberto**
 **81379 München (DE)**
• **Richerzhagen, Björn**
 **85055 Ingolstadt (DE)**

(74) Representative: **Siemens Patent Attorneys**
**Postfach 22 16 34**
**80506 München (DE)**

(54) **METHOD TO OPERATE A MOBILE RADIO ACCESS NETWORK BY A NETWORK OPTIMIZING UNIT, NETWORK OPTIMIZING UNIT, AUTONOMOUSLY GUIDED VEHICLE, RADIO NETWORK COMPRISING A NETWORK OPTIMIZING UNIT**

(57) The invention is related to a method to operate a mobile radio access network (1), by a network optimizing unit (3), wherein the mobile radio access network (1) comprises base stations ($g$) configured to operate in different levels of centralisation ($c_g$) of network functions (NF). The method comprises the following steps. Receiving a path ( $\mathbb{X}_{AB}$ ) request message (4), requesting a provision of a path ( $\mathbb{X}_{AB}$ ) for an autonomously guided vehicle ($v$) by a network optimizing unit (3). Determining the path ( $\mathbb{X}_{AB}$ ) according to a predefined optimization method by the network optimizing unit (3). Sending a path message (5) comprising the path ( $\mathbb{X}_{AB}$ ) to the autonomously guided vehicle ($v$) by the network optimizing unit (3). Controlling sets (S) of interfering base stations ($g$) to operate in a predefined level of centralization for inter-cell interference reduction ($c_g$) during the respective time frame of inter-cell interference.

EP 4 451 742 A1

## FIG 3

**Description**

The invention is related to a method to operate a mobile radio access network by a network optimizing unit, a network optimizing unit, an autonomously guided vehicle, and a radio network comprising a network optimizing unit

Industrial automation has been a long-pursued feature since the industrial revolution, with the intention of replacing human labour with autonomous machine work. Recent developments in radio access networks, positioning systems, and artificial intelligence have motivated the utilization of autonomously guided vehicles in industrial environments, whose purpose is to transport materials or equipment between fixed stations, monitor the factory status, etc. without the need for human intervention.

Autonomously guided vehicles need to be connected to the underlying industrial network wirelessly, that is, by means of a radio access network that enables communication with other factory components. In order to provide good connectivity to a large industrial area, multiple base stations of the radio access network have to be installed, with their respective coverage areas. The coverage areas of the base stations are also called cells. Cells of base stations may be partially overlapping. Owing to the scarcity and high cost of wireless spectrum, base stations are usually designed to share radio resources, which can lead to inter-cell interference. Inter-cell interference may occur in areas of inter-cell interference, where the cells overlap. Inter-cell interference may be especially problematic for autonomously guided vehicles, for which connectivity degradation may lead to inaccurate operation, temporary stalling, or even full-service disruption.

A possible solution to inter-cell interference is to implement inter-cell interference coordination or cancellation techniques between base stations. To allow inter-cell interference coordination or inter-cell interference cancellation techniques to reduce inter-cell interference between base stations whose cells overlap in an area of inter-cell interference, a specific level of a functional split of network functions between a respective local entity of the interfering base stations and a central entity coordinating the base station has to be set, wherein predefined network functions of the coordinated base stations are operated centralised in a single location, so as to provide a fast and high-throughput connection between them. In turn, this entails that the centralised network functions must communicate with the remote locations where the radio equipment is, which often requires prohibitively high link capacities that render full centralisation infeasible.

Instead, partial, adaptive function centralisation, also known as adaptive functional split, can be used to coordinate the inter-cell interference of just a subset of base stations, which can be dynamically selected.

However, any functional split that does not take into account the varying positions of the autonomously guided vehicles will lead to connectivity degradation for them, even if they are optimized for the average situation. In addition, autonomously guided vehicles whose movement ignores the instantaneous functional split are likely to traverse areas with high inter-cell interference instead of those where the inter-cell interference is being coordinated.

The conventional approach to mitigate inter-cell interference for small cell deployments as those in industrial networks is to use frequency planning to avoid spectrum reuse of nearby cells.

Plets, David, et al. "WiFi network planning and intra-network interference issues in large industrial warehouses." 2016 10th European Conference on Antennas and Propagation (EuCAP). IEEE, 2016.

Lamas, Saray Renilla, David Gonzalez, and Jyri Hamalainen. "Indoor planning optimization of ultra-dense cellular networks at high carrier frequencies." 2015 IEEE Wireless Communications and Networking Conference Workshops (WCNCW). IEEE, 2015.

Alternatively, cognitive radio techniques can be also applied so that users access the network in an opportunistic manner, although this is difficult to implement for cell-based communication networks.

Chiwewe, Tapiwa M., Colman F. Mbuya, and Gerhard $X_{AB}$. Hancke. "Using cognitive radio for interference-resistant industrial wireless sensor networks: An overview." IEEE Transactions on Industrial Informatics 11.6 (2015): 1466-1481.

Kpojime, Harold O., and Ghazanfar A. Safdar. "Interference mitigation in cognitive-radio-based femtocells." IEEE Communications Surveys & Tutorials 17.3 (2014): 1511-1534.

More advanced approaches consider the possibility of informing the vehicle about the interference-prone areas and adapting its path according to its connectivity constraints.

Ren, Yijing, and Vasilis Friderikos. "Interference Aware Path Planning for Mobile Robots in mmWave Multi Cell Networks." arXiv preprint arXiv:2207.02275 (2022).

Tatino, Cristian, Nikolaos Pappas, and Di Yuan. "Multi-robot association-path planning in millimeter-wave industrial scenarios." IEEE Networking Letters 2.4 (2020): 190-194.

Liu, Xiuming, et al. "Path planning for aerial sensor networks with connectivity constraints." 2017 IEEE International Conference on Communications (ICC). IEEE, 2017.

State-of-the-art approaches to autonomously guided vehicle pathfinding and driving usually either assume perfect wireless coverage, thus ignoring inter-cell interference effects, or take into account the known wireless radiomap for preferring and avoiding certain areas. Thus, the radio access network and inter-cell interference is not considered to be modifiable.

It is an object of the present invention to provide a solution to jointly adapt the functional split and select the path of autonomously guided vehicles so as to meet connectivity constraints, optimize performance, and/or reduce operation cost.

According to a first aspect of the invention a method to manage levels of centralisations of network functions of base stations of a mobile radio access network along a path of an autonomously guided vehicle is provided.

The mobile radio access network may be designed as a 5G-Network. The mobile radio access network may comprise base stations configured to communicate with the autonomously guided vehicle in an area. Each of the base stations may be assigned to a respective cell. The operation of the network is performed by a set of network functions. Each base station may comprise a distributed unit configured to deploy a local subset of the network functions. A central unit of the network may deploy a central subset of the network functions. A degree of centralisation of the network functions in the central unit may be adapted by shifting network functions from the local subset to the central subset or vice versa. The shift of network functions of distributed units to the central unit is called a centralisation or a function split. In a default level of centralisation a predefined number of the network functions may be operated in the central unit and a predefined number of the network functions may be operated in the distributed unit. A first step of the method comprises a reception of a path request message by the network optimization unit. The path request message requests a provision of the path specifying a spatial and temporal progression from the point of origin to the point of destination for the autonomously guided vehicle. In other words, in the first step, the network optimization unit receives the path request message requesting the network optimization unit to provide the path for the autonomously guided vehicle. The network optimization unit may be an entity of the mobile radio access network. The network optimization unit may be configured to set the levels of centralisations of the respective base stations and to generate paths of autonomously guided vehicles of the network.

The path request message may be sent to the network optimization unit by the respective autonomously guided vehicle. The path request message may ask the network optimization unit to provide the path for the autonomously guided vehicle. The point of origin and the point of destination may describe respective spatial locations and respective times or timeframes.

In a next step the network optimization unit determines the path for the autonomously guided vehicle according to a predefined path optimization function. The path optimization function may be configured to evaluate the path according to a predefined criterion. The path may be a function, a trajectory or a list of checkpoints giving a respective location and respective timestamps. The predefined path optimization function may be configured to provide the path allowing a predefined quality of connectivity between the autonomously guided vehicle and the network.

In a next step the network optimization unit determines a set of interfering base stations of an area of inter-cell interferences along the path and a respective time frame, when the autonomously guided vehicle is expected to be in the area of inter-cell interferences according to the path. In other words, the network optimization unit determines whether the path goes through an area of inter-cell interferences of the set of interfering base stations. The area of inter-cell interference is an area where the cells of the interfering base stations overlap and inter-cell interference between the interfering base stations occurs or is expected. The area of inter-cell interference may be a predefined area around a boundary of two adjacent cells of the interfering base stations. The inter-cell interferences may reduce a connectivity of the autonomously guided vehicle inside the area of inter-cell interferences.

In a next step, the optimization unit may send a path message comprising the path to the autonomously guided vehicle. In other words the network optimization unit provides the path connecting the point of origin to the point of destination to the autonomously guided vehicle via the path message.

In a next step the network optimization unit checks whether the level of centralisation of the interfering base stations of the set of the area of inter-cell interferences is set to a predefined level of centralization for interference reduction for the time frame the autonomously guided vehicle is in the area of inter-cell interferences. The network optimization unit controls the interfering base stations of the area of inter-cell interferences to set the interfering base stations in the predefined level of centralization for inter-cell interference reduction. This may occur if they are in a different level of centralisation than the predefined level of centralization for inter-cell interference reduction for inter-cell interferences in the timeframe.

In other words the network optimization unit follows the advancement of autonomously guided vehicle along the path and controls the base stations to ensure that the sets of interfering base stations are operated in the predefined level of centralization for inter-cell interference reduction for inter-cell interferences, when the autonomously guided vehicle passes the respective area of inter-cell interference.

After the timeframe related to the respective area of inter-cell interference has passed by the autonomously guided vehicle, the network optimization unit may set the level of centralisation of the interfering base stations of the set of interfering base stations to a preceding state of centralisation or to a default state of centralisation in order to reduce a load of the central unit.

The invention provides two ways of optimizing communication between the autonomous guided vehicle and the radio access network. The first method comprises optimizing the path of the autonomously guided vehicle. The second method comprises coordinating the centralisation levels of the interfering base stations during the progress of the path of the autonomously guided vehicle.

According to further embodiment of the invention, the method comprises a step of receiving a predefined message by the network optimization unit. The message may describe a change of a constraint relevant for the path of the autonomously guided vehicle and/or the operation of the radio access network. The network optimization unit is configured to redetermine the path for the autonomously guided vehicle according to the predefined path optimization function upon reception of the message according to the new constraint. In other words, the network optimization unit recalculates the path for the autonomously guided vehicle upon a reception of the predefined message. The redetermination may comprise for example a recalculation of at least a part of the path or a recalculation of the whole path.

In a next substep the network optimization unit determines whether the redetermined path goes through the area of inter-cell interferences of the set of interfering base stations. The network optimization unit determines the set of the interfering base stations of the area of inter-cell interferences and the time frame, when the autonomously guided vehicle is expected to be in the area of inter-cell interferences according to the recalculated path.

In other words as the path has changed the network optimization unit has to investigate the new set of interfering base stations. The set of interfering base stations may be different from the former set of interfering base stations of the original path. Also the respective timeframe of inter-cell interference of the new set of interfering base stations has to be recalculated according to the new path.

In a next step the network optimization unit sends an update message to the autonomously guided vehicle comprising the redetermined path for the autonomously guided vehicle.

The network optimization unit controls the set of the interfering base stations to centralise the at least one function of base stations on the central unit of the mobile radio access network during the respective timeframe of inter-cell interference. In other words, the network optimization unit controls the sets of interfering base stations according to the new path.

According to a further embodiment of the invention the predefined message is a path error message describing a deviation and/or an expected deviation of the motion of the autonomously guided vehicle from the path. In other words the predefined message indicates that the autonomously guided vehicle is not able to follow the path and/or the autonomously guided vehicle recognized a deviation of the motion of the autonomously guided vehicle from the path. The path error message may be provided by a central coordination unit, tracking the motion of the autonomously guided vehicle or by the autonomously guided vehicle. The path error message may be sent by the autonomously guided vehicle if an unexpected obstacle is detected by the autonomously guided vehicle that does not allow the following of the path by the autonomously guided vehicle. The path error message may also be sent by the autonomously guided vehicle upon a detection of an error of operation of the autonomously guided vehicle affecting the motion of the autonomously guided vehicle.

According to a further embodiment of the invention the predefined message is the path request message of another autonomously guided vehicle. The path request message of the other autonomously guided vehicle requests a provision of a path for the other autonomously guided vehicle specifying a spatial and temporal progress from the point of origin to the point of destination for the other autonomously guided vehicle.

The network optimization unit determines the path for the other autonomously guided vehicle according to the predefined path optimization function. The path of the other autonomously guided vehicle may affect the path of the autonomously guided vehicle and or a capacity of the network. Therefore the network optimization unit may have to recalculate the path of the autonomously guided vehicle. The network optimization unit may recalculate the path of both autonomously guided vehicles in parallel or in a row.

According to a further embodiment of the invention the predefined message is a centralisation status message describing a status of the radio access network. The centralisation status message may be related to the status of at least one of the base stations or a network capacity of the at least one of the base stations. The status of this message may for example describe that a change in the capacity of the base station has occurred. The change may affect the result of the predefined path optimization function so that a change of the path is necessary in order to provide an optimized path. Therefore the network optimization unit may recalculate the path and provide the new path to the autonomously guided vehicle.

According to a further embodiment of the invention the predefined path optimization function determines the path to provide a predefined connectivity of the autonomously guided vehicle to the mobile radio access network along the path. In other words the predefined path optimization function is related to a fulfilment of the predefined connectivity of the autonomously guided vehicle to the mobile radio access network during the following of the path. The predefined path optimization function may for example ensure that at least one key performance indicator of the connection of the autonomously guided vehicle to the mobile radio access network is fulfilled during the following of the path by the mobile radio access network.

According to further embodiment of the invention the predefined path optimization function is configured to optimize a total connectivity of a set of autonomously guided vehicles to the mobile radio access network. In other words, the network optimization unit is configured to provide paths for multiple autonomously guided vehicles. The optimization function is configured to determine the paths of the autonomously guided vehicles, that a total connectivity and/or energy minimization and/or latency minimization is provided while satisfying minimum connectivity constraints. . The network optimization entity may provide a path that may not be the optimal path for the single autonomously guided vehicle, but may allow an optimal connectivity of the autonomously guided vehicles in total.

According to a further embodiment of the invention, the method comprises an investigation of an expected level of inter-cell interference in the area of inter-cell interference by the network optimization unit. In other words, the optimization unit determines an expected amount of the inter-cell interference. The amount may describe a level of degradation of the connectivity of the autonomously guided vehicle in the area of inter-cell interference. The network optimization unit determines the level of centralisation for the area of inter-cell interference depending on the expected level of inter-cell interference in the area of inter-cell interference. Different levels of centralisation may be possible, wherein an amount of centralised network functions may depend on the level of centralisation. It may be possible, that in case of a higher level of inter-cell interference, the level of centralisation must be higher to reduce or to avoid the inter-cell interference. The network optimization unit sets the level of centralisation in the set of base stations for the expected time frame related to the area of inter-cell interference.

For use cases or use situations which may arise during the procedure and which are not explicitly described here, it may be provided that, in accordance with the procedure, an error message and/or a request for user feedback is issued and/or a default setting and/or a predetermined initial state is set.

A second aspect of the invention is related to a network optimization unit.

The network optimization unit is configured to receive a path request message. The path request message requests a provision of the path specifying a spatial and temporal progress from the point of origin to the point of destination for the autonomously guided vehicle.

The network optimization unit is configured to determine the path for the autonomously guided vehicle according to a predefined path optimization function.

The network optimization unit is configured to determine whether the path goes through an area of inter-cell interferences of a set of interfering base stations. The network optimization unit is configured to determine the set of the interfering base stations of the area of inter-cell interferences and a time frame, when the autonomously guided vehicle is expected to be in the area of inter-cell interferences according to the path.

The network optimization unit is configured to send a path message comprising the path to the autonomously guided vehicle.

The network optimization unit is configured to check whether the set of the interfering base stations of the area of inter-cell interferences is set to a predefined level of centralization for inter-cell interference reduction for inter-cell interferences in the time frame and to control the interfering base stations of the area of inter-cell interferences to set the interfering base stations in the predefined level of centralization for inter-cell interference reduction if they are in a different level of centralisation than the predefined level of centralization for inter-cell interference reduction for inter-cell interferences.

A third aspect of the invention is related to an autonomously guided vehicle.

A fourth aspect of the invention is related to a radio network comprising a network optimization unit.

A fifth aspect of the invention is related to a computer program product comprising program code for performing a method according to the first aspect. The computer program product may also be regarded to a computer program.

A sixth aspect of the invention is related to a computer-readable storage medium comprising at least the computer program product according to the fifth aspect.

The network optimization unit can be understood as a hardware module or as a software module. In particular, a module may also comprise a hardware and a software portion implemented on the hardware. A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

Independent of the grammatical term usage, individuals with male, female or other gender identities are included within the term.

The network optimization unit and the autonomously guided vehicle may comprise computing units to perform steps of the method.

A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

FIG 1 shows a schematic illustration of a radio access network;

FIG 2 shows a schematic illustration of different levels of centralisation.

FIG 3 shows a schematic illustration of a method to manage levels of centralisations of network functions of base stations of a mobile radio access network; and

FIG 4 shows two paths provided to respective autonomously guided vehicles.

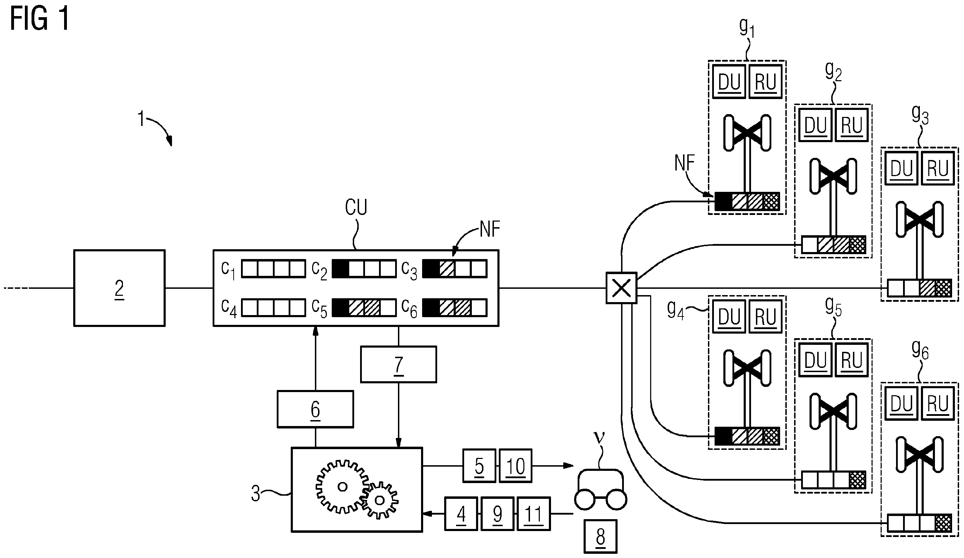

FIG 1 shows a schematic illustration of a radio access network.

The radio access network 1 may be a 5G-Network 1 or another radio network 1. The radio access network 1 may be structured according to ORAN architecture.

The radio access network 1 may be suitable for industrial indoor scenarios for example, where autonomously guided vehicles $v$ may be connected via the mobile radio access network 1 to an industrial core network 2, which in turn may be connected to a rest of networking equipment and/or internet. The mobile radio access network 1 may comprise base stations $g$ that may be configured to send data to the autonomously guided vehicles $v$ and to receive data from the autonomously guided vehicles $v$ and other user equipment. Each of the base stations $g$ may be assigned to a respective cell C.

The base stations $g$ and the central unit 3 may be configured to provide network functions NF of the base stations $g$. The network functions NF may be performed in a local entity of the respective base station $g$. The local entity may comprise a distributed unit DU and/or a radio unit RU of the respective base station $g$.

In other words, following an architecture of the 5G mobile radio access network 1, each base station $g$ may be divided into a centralised unit CU, a distributed unit DU, and a radio unit RU and/or a remote unit. The radio unit RU may host a radio equipment including antennas. The distributed unit DU may be deployed in a local entity near the radio unit RU, whereas the centralised unit CU may be deployed in a central entity. Each distributed unit DU has the capacity to run a portion or the whole functionality of its corresponding base station $g$ provided by network functions NF, except for the radio processing associated to the radio unit RU.

The network functions NF may either be operated in the local entity of the respective base station $g$ or in the central entity. An amount of the network functions NF operated in the central entity may depend on a level of centralisation $c_g$ set in the respective base station $g$.

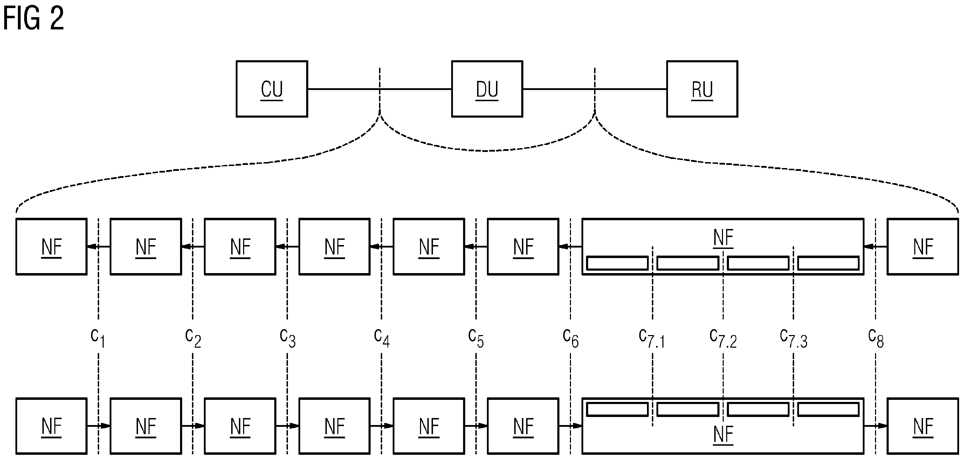

If required, the centralised unit CU may take over functionality of one or more of the distributed units DU. The takeover may be performed by a shift of an operation of the network functions NF from the distributed units DU to the centralised unit CU. This is known as a functional split, which may exhibit multiple options. The multiple options may comprise defined levels of centralisation $c_g$. When the network functions NF are centralised at the centralised unit CU, and, consequently, run on the same machine, they can quickly communicate with each other. This may allow a coordination of an operation in a set S of two or more base stations $g$ to reduce or to cancel inter-cell interference between the base stations $g$ of the set S. A depiction of a considered architecture of the mobile radio access network 1 is shown in FIG 2.

Although a full centralisation of the network functions NF at the centralised unit CU of all base stations $g$ would be beneficial from a performance perspective, this may not be feasible in considered scenarios. Either the centralised unit CU may lack the computational capacity for taking over the processing of all base stations $g$ or a network connecting the centralised unit CU and the distributed units DU does not have enough link capacity to support the high data rates needed for full centralisation. However, partial function centralisation, understood as the centralisation of not all network functions NF for all or some of the base stations $g$, may be possible. Furthermore, it may be possible to dynamically change the level of centralisation $c_g$ of each base station $g$, by using pre-existing techniques to that effect.

The autonomously guided vehicles $v$ in the network 1 may perform semi-autonomous or full-autonomous tasks, which entails autonomously moving from their position of origin $p_A$ to a position of destination $\mathbf{p_B}$. The motion may be demanded by an application layer 8 of the respective autonomously guided vehicle $v$. The autonomously guided vehicles $v$ may require a predefined connectivity to navigate and perform their work. The connectivity may be provided by the mobile radio access network 1. Owing to potential inter-cell interference at areas of interference AI like at edges or boundaries between two or more cells $C$, it may be possible that the autonomously guided vehicles $v$ experience bad or lost connectivity, which negatively impacts their current task.

The task of the network optimizing unit 3 may be to compute both the paths $\mathbb{X}_{AB}$ to be followed by the autonomously guided vehicles $v$ when they need to move and a sequence of optimal centralisations of the base stations $g$ of the mobile radio access network 1 such that constraints of autonomously guided vehicle $v$ connectivity, trip duration, and link capacities are met, and/or overall connectivity and operating cost may be optimized. As a result, the network optimizing unit 3 may control the base stations $g$ of the mobile radio access network 1 and thus the centralised unit and the distributed units DU to set their level of centralisation $c_g$ according to the sequence.

The network optimizing unit 3 may be provided by the centralised unit CU or by a dedicated device of the mobile radio access network 1. When the mobile radio access network 1 is structured according to O-RAN architecture, the network optimizing unit 3 may be realized as a third-party application rApp of a non-real-time mobile radio access network intelligent controller Non-RT RIC as part of a service management and orchestration SMO framework. New interfaces may be needed to accommodate information exchange between the base stations $g$, autonomously guided vehicles $v$, and the network optimizing unit 3, or existing ones can be repurposed with new messages and information elements.

The network optimization unit 3 may interface both, the base stations $g$ and the autonomously guided vehicles $v$ so as to compile the required information to optimize the paths $\mathbb{X}_{AB}$ of the moving vehicles and the levels of centralisation $c_g$ of the base stations $g$ of the mobile radio access network 1.

The autonomously guided vehicles $v$ may be configured to send a path request message 4 to the network optimization unit 3 to request a provision of a path $\mathbb{X}_{AB}$ from a point of origin $p_A$ to a point of destination $p_B$. The autonomously guided vehicles $v$ may also provide vehicle status message 11 comprising their current status and/or position. The autonomously guided vehicles $v$ may also be configured to provide a path error message 9 to the network optimization unit 3 if an obstacle is detected by the autonomously guided vehicles $v$. If the path $\mathbb{X}_{AB}$ of the autonomously guided vehicle $v$ is changed by the network optimization unit 3, the network optimization unit 3 may send a path update message 10 comprising an updated path $\mathbb{X}_{AB}$ to the autonomously guided vehicle $v$.

The network optimization unit 3 may receive centralisation status messages 7 comprising a current level of centralisation $c_g$ of a base station $g$. To set the level of centralisation $c_g$ of a base station $g$, the network optimization unit 3 may send a centralisation instruction message 6 to the base station $g$.

The approach comprises a strategy to calculate both, the paths $\mathbb{X}_{AB}$ for the respective vehicles $v$ and the levels of centralisation $c_g$ to be set in the base stations $g$. The paths $\mathbb{X}_{AB}$ for the respective autonomously guided vehicles $v$ may be calculated by a predefined optimization function, optimizing the paths $\mathbb{X}_{AB}$ to meet connectivity and network capacity constraints. The paths $\mathbb{X}_{AB}$ may be send to the autonomously guided vehicles $v$ in path messages 5.

The following mathematical notation may be used to formalize the description of the scenario and procedure. The mobile radio access network 1 comprising $G$ of the base stations $g$, and $V$ of the autonomously guided vehicles $v$ is considered. A received signal power from the base station $g \in \{1, \ldots , G\}$ at a point $p$ within a considered area may be denoted as $r(g,p)$. A serving base station at point $p$ may be, in general, the one providing a greatest signal power at

$$h(p) \stackrel{\text{def}}{=} \arg\max_g r(g, p)$$

that point. That may be the base station $g$ related to the cell $C$ of the point. A function may be used to refer to the index of the serving base station at the point $p$. For any point $p$, the signal power received by the base station h(p) is useful, whereas the signal power received from other base stations $g$, that may not be attributed to the cell $C$ at point $p$ may be regarded as interference. The base station $g$ of the cell $C$ and the base stations $g$ providing a signal, interfering with the signals of the base station $g$ of the cell $C$ may be a set S of interfering base stations $g$.

The functional split of the base station $g$ with the index $c_g \in \{1, \ldots , C\}$, where $C$ is the total number of functional split options, also known as levels of centralisation $c_g$, may be modelled. It may be assumed that the values of $c_g$ are sorted such that the effect of the inter-cell interference coordination/cancellation capabilities between base stations $g$ featuring the same level of centralization $c_g$ may increase with $c_g$. In case that base stations $c_g$ do not have the same level of centralization $c_g$, they may only coordinate to the extent allowed by the base station $g$ with the lowest $c_g$. The vector of levels of centralization $c_g$ for all the base stations $g$ may be denoted as $c = \langle c_1, \ldots , c_G \rangle$. Since the network optimization unit 3 may have a capability to change $\boldsymbol{c}$ over time, the vector of functional splits at time $t$ is denoted as c(t).

To quantify the maximum inter-cell interference coordination and/or cancellation effect possible with the level of centralization $c_p$, an inter-cell interference cancellation factor $i(c):\{1, \ldots , C\} \mapsto [0,1]$ is defined, which may return a multiplier between 0 and 1 reflecting the inter-cell interference reduction effect. As a result of all the above it may be defined a signal-to-interference-and-noise-ratio (SINR) $\eta$ at point $p$ given functional split vector $\boldsymbol{c}$ as:

$$\eta(\boldsymbol{c}, p) = \frac{r(h(p), p)}{\sum_{g \neq h(p)} i\big(\min(c_{h(p)}, c_g)\big) \cdot r(g, p) + \sigma},$$

where $\sigma$ may be an average thermal noise power, assumed constant for simplicity.

It may be denoted a continuous path between points $p_A$ and $p_B$ as $\mathbb{X}_{AB} \subset \mathbb{R}^2$ . It may be assumed that for each autonomously guided vehicle $v$ there may always be an implicit pair of a point of origin $p_A$ and a point of destination $p_B$ which may be updated over time, so the path $\mathbb{X}_{AB}$ associated to vehicle $v$ simply may be referred to by $\mathbb{X}_v$ .

Moreover, the trip function $x_v(t) : \mathbb{R} \mapsto \mathbb{X}_v$ may map time to points within its path for vehicle $v$.

A collection of all trip functions is denoted as $\boldsymbol{x}(t) = \langle x_1(t), \ldots , x_V(t) \rangle$. For modeling and communication convenience, continuous paths may be approximated as finite, ordered sequences of extreme and intermediate points or checkpoints denoted by $\widehat{\mathbb{X}}_v = \langle p_v^0, p_v^1, \ldots, p_v^F \rangle$ , where $p_v^n$ is the $n$-th out of $F$ checkpoints. The checkpoints $p_v^n$ may be selected such that vehicles $v$ are able to go from one to the next one in simple, quasi-linear segments.

For each point in $\widehat{\mathbb{X}}_v$ , a sequence of expected arrival times as $\mathbb{T}_v = \langle t_v^0, t_v^1, \ldots, t_v^F \rangle$ , is defined such that $x_v(t_v^n) = p_v^n$ . With the intention of accommodating uncertainty, we can similarly define $\mathbb{T}_v^-$ and $\mathbb{T}_v^+$ as the earliest and latest instants, respectively, when the vehicle $v$ is allowed to reach the corresponding checkpoints.

FIG 2 shows a schematic illustration of different levels of centralisation.

The different levels of centralisation $c_g$ ma describe the separation of the network functions NF between the different units of a base station $g$.

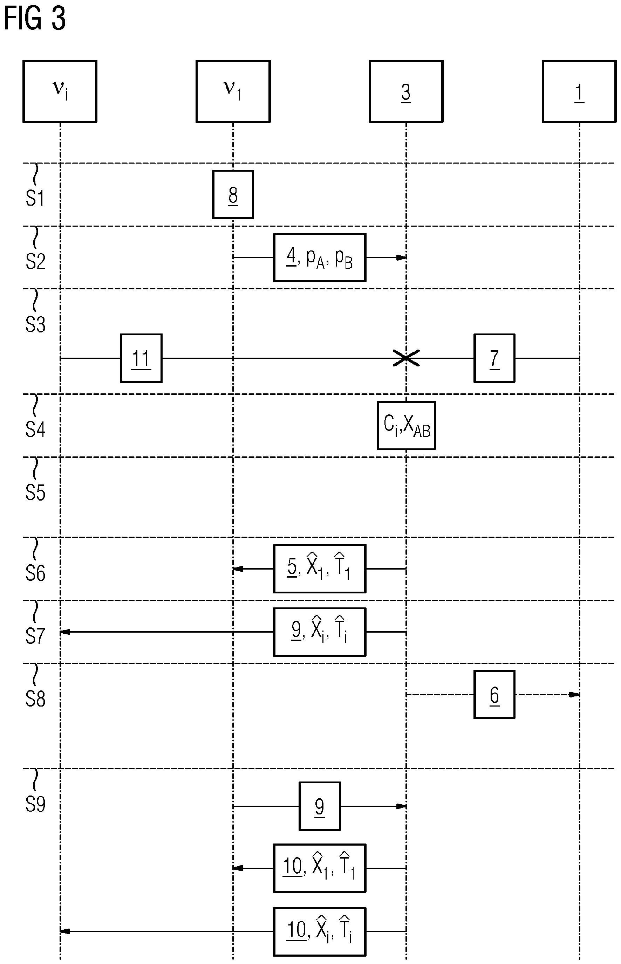

FIG 3 shows a schematic illustration of a method to manage levels of centralisations $c_g$ of network functions NF of base stations $g$ of a mobile radio access network 1.

The overall goal of this invention may be to provide an efficient solution for calculating and communicating

efficient paths $\mathbb{X}_{AB}$ for moving vehicles $v$ served by a mobile communication network 1, while guaranteeing connectivity constraints and optimize the overall network 1 operation and resource consumption via adapting the level of centralisation $c_g$ of the base stations $g$.

In a first step S1 an application layer 8 of the autonomously guided vehicle $v_1$ may request a provision of a path $\mathbb{X}_{AB}$ describing a motion from a point of origin $p_A$ to a point of destination $p_B$ for the autonomously guided vehicle $v_1$.

The automatically guided vehicle $v_1$ may receive a command from the application layer 8 that involves moving from its current point of origin $p_A$ to a point of destination $p_B$. During the motion along the path $\mathbb{X}_{AB}$ the automatically guided vehicle $v_1$ may need a minimum quality of connectivity in terms of minimum throughput and/or maximum latency for example. Alternatively or in addition, the automatically guided vehicle $v_1$ may benefit from optimized connectivity along the trip in terms of maximized average throughput, minimized average latency for example. To this end, the automatically guided vehicle $v_1$ may need to figure out an optimal path $\mathbb{X}_{AB}$ from the current point of origin $p_A$ to the point of destination $p_B$ that may avoids inter-cell interference-prone areas, areas of inter-cell interference AI, whose traversal may result in degraded quality of connectivity.

In a second step S2 the autonomously guided vehicle $v$ may transmit a path request message 4 comprising the point of origin $p_A$ and the point of destination $p_B$ and maybe other information like for example a necessary connectivity to be provided to the autonomously guided vehicle $v_1$ by the radio access network 1 to the network optimization unit 3. The network optimization unit 3 may receive the path request message 4.

In other words, the automatically guided vehicle $v_1$ may send the path request message 4 to the network optimization unit 3. The path request message 4 may comprise the point of origin $p_A$ and the point of destination $p_B$.

The path request message 4 may comprise additional information to assist the calculation of the path $\mathbb{X}_{AB}$ by the network optimization unit 3, such as maximum linear and rotational speed of the automatically guided vehicle $v_1$, a maximum duration of the motion along the path $\mathbb{X}_{AB}$, a minimum required throughput during the trip average or absolute or maximum allowed latency.

Alternatively, the path request message 4 may be sent by a central fleet management unit on behalf of the automatically guided vehicle $v_1$, which later internally forwards the received path $\mathbb{X}_{AB}$ to the corresponding automatically guided vehicle $v$. Notwithstanding this possibility, in the remaining of this procedure it is assumed that the automatically guided vehicle $v_1$ interacts directly with the network optimization unit 3.

The network optimization unit 3 may receive centralisation status messages 7 about the levels of centralisation $c_g$ of the respective base stations $g$ of the radio access network 1 and vehicle status messages 11 about the autonomously guided vehicles $v_i$ communicating with the network 1 in the area in a step S3.

Upon receiving the path request message 4 from the automatically guided vehicle $v_1$, the network optimization unit 3 may retrieve the current functional split vector c in the centralisation status message 7, containing the configuration of the levels of centralisation $c_g$ of all base stations $g$ in the RAN, and a current position, activity, and requirements of all other automatically guided vehicles $v_i$ in the network 1.

In a step S4 the network optimization unit 3 may calculate the path $\mathbb{X}_{AB}$ for the autonomously guided vehicle $v_1$ connecting the point of origin $p_A$ with the point of destination $p_B$ according to a predefined optimization method. The network optimization unit 3 may check whether the path $\mathbb{X}_{AB}$ crosses an area of inter-cell interference AI. The network optimization unit 3 may determine sets S of interfering base stations $g$ related to the area of inter-cell interference AI and a time frame when the automatically guided vehicle $v_1$ is expected to be in the area of inter-cell interference AI.

In other words, from the information provided by the path request message 4, the network optimization unit 3 may compute a most adequate functional split sequence $c^*(t)$ describing a sequence of levels of centralisation of the base stations and the associated path described by an optimal vector of trip functions $x^*(t)$ for all vehicles $v$ not only for vehicle $v_1$, since it may be necessary to update obsolete paths $\mathbb{X}_{AB}$ of already moving vehicles. For instance, $c^*(t)$

and $x^*(t)$ may be obtained by solving a following optimization problem, which maximizes the aggregated signal-to-interference-plus-noise-ratio for all vehicles $v_i$ at all times given a minimum required signal-to-interference-plus-noise-ratio $H_v$ for each vehicle $v$:

$$\langle \boldsymbol{c}^*(t), \boldsymbol{x}^*(t) \rangle = \arg \max_{\boldsymbol{c}(t), \boldsymbol{x}(t)} \sum_{v=1}^{V} \int_{t_0}^{\infty} \eta\big(\boldsymbol{c}(t), x_v(t)\big) dt$$

subject to:

$$\eta\big(\boldsymbol{c}(t), x_v(t)\big) \geq H_v \ \forall v \in \{1, \dots, V\}, \forall t,$$

Network and capacity constraints.

Other optimization problems may also be possible, for instance those providing max-min or proportional fairness over the vehicles. In addition, approximate solutions are also possible.

In a step S5 the network optimization unit 3 may discretize the path $\mathbb{X}_{AB}$ described by the optimal trip function into a sequence of checkpoints $\widehat{\mathbb{X}}_v$, as well as expected/earliest/latest timestamps $\mathbb{T}_v / \mathbb{T}_v^- / \mathbb{T}_v^+$ at which the automatically guided vehicle $v_1$ should reach the respective checkpoints.

In a step S6 the network optimization unit 3 may send a path response message 10 comprising the path $\mathbb{X}_{AB}$, described by the sequence of checkpoints $\widehat{\mathbb{X}}_1$ and the timestamps $\mathbb{T}_1$ to the autonomously guided vehicle $v_1$. In parallel to the transmission of the path $\mathbb{X}_{AB}$ for the autonomously guided vehicle $v_1$ the network optimization unit 3 may send path update messages 10 comprising updated paths $\mathbb{X}_{AB}$ of other autonomously guided vehicles $v_i$ to the other autonomously guided vehicles $v_i$.

In other words, the network optimization unit 3 builds and sends the path response message 5 for the autonomously guided vehicle $v_1$ comprising the sequence of checkpoints $\widehat{\mathbb{X}}_1$, the associated sequence of timestamps $\widehat{\mathbb{T}}_1$, comprising timestamps $\mathbb{T}_v / \mathbb{T}_v^- / \mathbb{T}_v^+$, and any other relevant information such as recommended speed, expected connectivity fluctuations, to the autonomously guided vehicle $v_1$.

The network optimization unit 3 may send the path update message 10 with content like the path message 5 to those of the automatically guided vehicles $v_i$ whose paths $\mathbb{X}_{AB}$ and/or timestamps $\mathbb{T}_v$ have changed because of the new path request message 4 of the autonomously guided vehicle $v_1$.

In a step S8 the autonomously guided vehicle $v_1$ and the other autonomously guided vehicles $v_i$ may follow their respective paths $\mathbb{X}_{AB}$. During the following of the respective paths $\mathbb{X}_{AB}$ the network optimization unit 3 may send centralization instruction messages 6 to the radio access network 1 to set the sets S of interfering base stations $g$ to a predefined level of centralization for inter-cell interference reduction $c_g$ for the time frame when the automatically guided vehicles $v = i, 1$ are expected to be in the respective area of inter-cell interference AI.

After receiving the new or updated paths $\mathbb{X}_{AB}$ , the automatically guided vehicles $v_i$ may follow instructions and move towards the checkpoints $\widehat{\mathbb{X}}_v$ within the allowed time intervals. At the same time, the network optimization unit 3 instructs the CU and DUs of the base stations $g$ to change their functional split in accordance with the time-dependent vector of functional splits $c^*(t)$ selected in step S4.

In a step S9 the autonomously guided vehicle $v_1$ may detect an unforeseen stop or an unforeseen event. The autonomously guided vehicle $v_1$ may for example detect an obstacle in the path $\mathbb{X}_{AB}$ . The autonomously guided vehicle $v_1$ may send a path error message 9 to the network optimization unit 3. The network optimization unit 3 may recalculate the path $\mathbb{X}_{AB}$ of the autonomously guided vehicle $v_1$ and provide a path update message 9 to the autonomously guided vehicle $v_1$. The obstacle may also affect the paths $\mathbb{X}_{AB}$ of the other autonomously guided vehicles $v_i$. Therefore it may be possible that the network optimization unit 3 may send path update messages 10 to at least one other of the autonomously guided vehicles $v_1, v_i$. The autonomously guided vehicles $v_1, v_i$ may follow the respective received updated paths $\mathbb{X}_{AB}$ .

In other words, if one of the automatically guided vehicles $v$ realizes that it has not or will not be able to comply with the path $\mathbb{X}_{AB}$ and/or timestamps $\mathbb{T}_v$ provided by the network optimization unit 3, it may send the path error message 9 informing the network optimization unit 3 about the problem. The network optimization unit 3 may recalculate a new set of paths $\mathbb{X}_{AB}$ and timestamps $\mathbb{T}_v$ for the given situation and send the path update messages 10 to the involved automatically guided vehicles $v$ comprising updates paths $\mathbb{X}_{AB}$ .

The steps described above may repeat whenever an autonomously guided vehicle $v$ is commanded to move by the respective application layer 8.

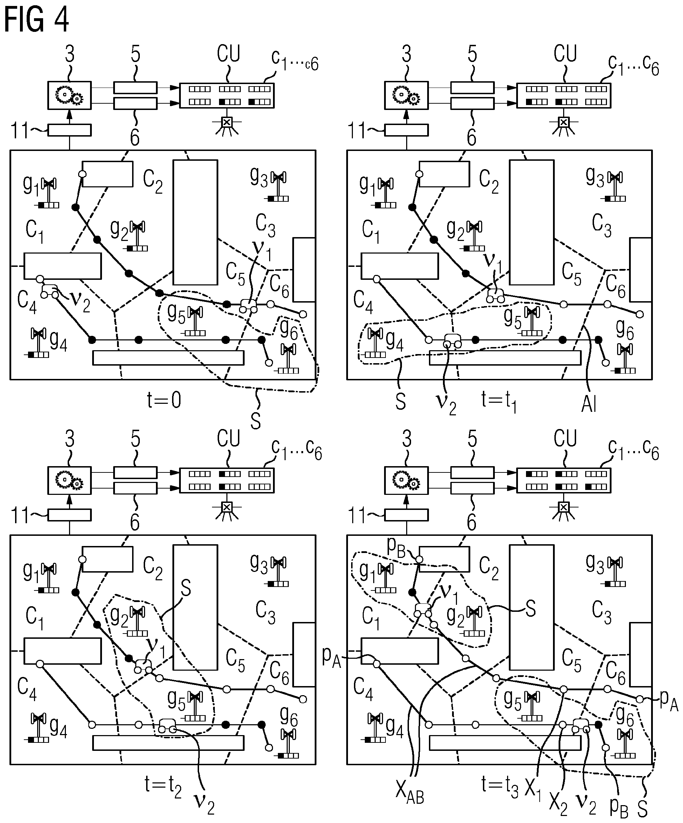

FIG 4 shows two paths $\mathbb{X}_{AB}$ provided to respective autonomously guided vehicles $v$.

The paths $\mathbb{X}_{AB}$ may connect the point of origin $p_A$ with the point of destination $p_B$ of the respective autonomously guided vehicles $v_1, v_2$ .

The paths $\mathbb{X}_{AB}$ may be described by checkpoints $\widehat{\mathbb{X}}_v$ . The paths $\mathbb{X}_{AB}$ may guide the autonomously guided vehicles $v$ through an area. The radio access network 1 may comprise base stations $g$ in the area wherein each of the base stations $g$ is associated with respective cells $C$ in the area. There may be a danger of inter-cell interference between base stations $g$ of neighboring cells $C$ in areas of inter-cell interference AI close to the cell $C$ boundaries. The inter-cell interferences may reduce the connectivity of autonomously guided vehicles $v$ situated in the areas of inter-cell interference AI.

Therefore it has to be provided that inter-cell interferences are reduced when the autonomously guided vehicles $v_1, v_2$ are in the areas of inter-cell interference AI. In order to reduce inter-cell interference, at least one network function of the base stations $g$ of neighboring cells $C$ contacting the cell $C$ boundary may have to be centralised on the central unit CU. As the paths $\mathbb{X}_{AB}$ are known to the network optimization unit 3 the network optimization unit 3 may change the centralization of interfering base stations $g$, when the autonomously guided vehicles $v_1, v_2$ are situated in the areas of inter-cell interference AI

At time t=0, a first of the autonomously guided vehicles $v_1$ may cross the boundaries of cells $C_5$ and $C_6$, wherein the operation of network functions NF of the set S comprising base station $g_5$ and base station $g_6$ is centralized at the predefined level of centralization $c_g$ to minimize inter-cell interference, whereas the second of the autonomously guided

vehicles $v_2$ has started to move after receiving a path message 5 comprising the path $\mathbb{X}_{AB}$ from the network optimizing unit 3.

At time t=t1 the second autonomously guided vehicle $v_2$, may be situated at the border between the cell $C_4$ of base station $g_4$ and the cell $C_5$ of base station $g_5$. Therefore base station $g_4$ and base station $g_5$ may be attributed to an area of inter-cell interference AI wherein one of the autonomously guided vehicles $v_1$, $v_2$ is inside the area of inter-cell interference AI. The network optimization unit 3 may control base station $g_4$ and $g_5$ to operate with a higher level of centralisation $c_g$.

The first of the autonomously guided vehicles $v_1$ may be situated inside the cell $C_5$ of base station $g_5$. Therefore the first of the autonomously guided vehicles $v_1$ is not inside the area of inter-cell interference AI of base station $g_5$ and base station $g_6$ anymore. The network optimization unit 3 may control the radio access network 1 to operate base station $g_6$ with a normal level of centralization $c_g$ again.

The second of the autonomously guided vehicles $v_2$ may move between a second and a third checkpoint $\widehat{\mathbb{X}}_v$ of the path $\mathbb{X}_{AB}$, which may be associated with the centralisation of functions of base stations $g_4$, $g_5$ of cells $C_4$ and $C_5$ and the decentralization of 6, as it may be impossible to centralize more than two base stations $g$ due to network 1 limitations. In the meantime, the first of the autonomously guided vehicles $v_1$ may wait at the third checkpoint $\widehat{\mathbb{X}}_v$ of its path $\mathbb{X}_{AB}$, until a time to continue a motion is reached.

At time t=t2 none of the autonomously guided vehicles $v_1$, $v_2$ may be inside the area of inter-cell interference AI related to base station $g_4$. Therefore the network optimization unit 3 may control the network 1 to set the base station $g_4$ to a lower level of centralization $c_g$.

The first of the autonomously guided vehicles $v_1$ may be situated at the border between the cell $C_2$ of base station $g_2$ and the cell $C_5$ of base station $g_5$. The network optimization unit 3 may control base station $g_2$ to operate in the higher level of centralization for inter-cell interference reduction $c_g$.

The first of the autonomously guided vehicles $v_1$ may continue its trip as cells $C_2$ and $C_5$ are set in the predefined level of centralization for inter-cell interference reduction $c_g$.

At time t=t3 the second of the autonomously guided vehicles $v_2$ may be situated at the border between the cell $C_5$ of base station $g_5$ and the cell $C_6$ of the base station $g_6$ and the second of the autonomously guided vehicles $v_2$ may be situated at the border between the cell $C_1$ of the base station $g_1$ and the cell $C_2$ of the base station $g_2$. Therefore the network optimization unit 3 may control the network 1 to set the level of centralization $c_g$ of the base stations $g_1$, $g_2$, $g_5$ and $g_6$ to a higher level of centralisation $c_g$ to centralize more network functions NF in the central unit CU to reduce inter-cell interference. The level of inter-cell interference may be lower at the respective borders, than at the border at the preceding times. Therefore the level of centralization $c_g$ may be configured to centralize only two of the network functions NF in the central unit CU.

In other words, both autonomously guided vehicles $v_1$, $v_2$ may cross cell boundaries. For this event, the network optimizing unit 3 may decide to partially centralize base stations $g_1$, $g_2$, $g_5$, and $g_6$ in order to limit the inter-cell interference, since full centralization is not possible and making autonomously guided vehicles $v$ wait further may violate trip duration constraints.

The disclosure provides a novel ability to change the mobile radio access network 1 configuration as well as the behavior of already active autonomously guided vehicles $v$ can be exploited to easily allocate resources to high-priority autonomously guided vehicles $v$, which may be very challenging for current approaches.

A co-location of certain lower-layer functionality on a distributed unit DU taking care of multiple radio units RU may enable additional low-latency coordination mechanisms to achieve desired Ultra reliable low latency communications functionality. Having a flexible functional split would allow to utilize such mechanisms on demand and only in areas where the respective service quality is required.

**Claims**

1. Method to operate a mobile radio access network (1), by a network optimizing unit (3), wherein the mobile radio access network (1) comprises base stations (g) configured to operate in different levels of centralisation ($c_g$) of network functions (NF), comprising steps of:

- Receiving a path request message (4), requesting a provision of a path ($\mathbb{X}_{AB}$) specifying a spatial and temporal progression from a point of origin ($p_A$) to a point of destination ($p_B$) for an autonomously guided vehicle ($v$);

- Determining the path ($\mathbb{X}_{AB}$) for the autonomously guided vehicle ($v$) according to a predefined optimization method;

- determining a set (S) of interfering base stations ($g$) of an area of inter-cell interferences (AI) along the path ($\mathbb{X}_{AB}$) and a respective time frame, when the autonomously guided vehicle ($v$) is expected to be in the area of inter-cell interferences (AI) according to the path ($\mathbb{X}_{AB}$);

- sending a path message (5) comprising the path ($\mathbb{X}_{AB}$) to the autonomously guided vehicle ($v$);

- controlling the interfering base stations ($g$) of the set (S) to operate in a predefined level of centralization for inter-cell interference reduction ($c_g$) during the respective time frame of inter-cell interference.

2. Method according to claim 1 comprising the step of:

- Receiving a predefined message by the network optimizing unit (3);

- Redetermining the path ($'\mathbb{X}_{AB}$) for the autonomously guided vehicle ($v$) according to the predefined path optimization function by the network optimizing unit (3);

- Redetermining the sets (S) of the interfering base stations ($g$) of the area of inter-cell interferences (AI) along the path ($'\mathbb{X}_{AB}'$) and the respective time frame, when the autonomously guided vehicle ($v$) is expected to be in the area of inter-cell interferences (AI) according to the path ($\mathbb{X}_{AB}$);

- sending an update message (10) comprising the redetermined path ($\mathbb{X}_{AB}$) to the autonomously guided vehicle ($v$) by the network optimizing unit (3);

- controlling the sets (S) of interfering base stations ($g$) to centralise the at least one network function (NF) of base stations ($g$) on the central unit (CU) of the mobile radio access network (1) during the respective time frame of inter-cell interference.

3. Method according to claim 2 wherein the predefined message is a path error message (9), describing a deviation and/or an expected deviation of the motion of the autonomously guided vehicle ($v$) from the path ($'\mathbb{X}_{AB}$).

4. Method according to claim 2 wherein the predefined message is the path request message (4) of another autonomously guided vehicle ($v$), requesting a provision of a path ($'\mathbb{X}_{AB}'$) specifying a spatial and temporal progression from the respective point of origin ($p_A$) to the respective point of destination ($p_B$) for the respective autonomously guided vehicle ($v$).

5. Method according to claim 2 wherein the predefined message is a centralisation status message (7), describing a status of at least one of the base stations ($g$).

6. Method according to one of the preceding claims, wherein the predefined path optimization function determines the path ($\mathbb{X}_{AB}$) to provide a predefined connectivity of the autonomously guided vehicle ($v$) to the mobile radio access network (1).

7. Method according to one of the preceding claims, wherein the predefined path optimization function is configured to optimize a total connectivity or another performance indicator while satisfying predefined connectivity constraints of a set of autonomously guided vehicles ($v$) to the mobile radio access network (1).

8.  Method according to one of the preceding claims, wherein

    - the levels of centralization ($c_g$) comprise at least two of the predefined levels of centralization for inter-cell interference reduction ($c_g$);

    the method comprises steps of:

    - investigation of an expected level of inter-cell interference in the area of inter-cell interference (AI) by the network optimization unit (3); and
    - setting the level of centralisation for inter-cell interference reduction ($c_g$) in the base stations ($g$) of the set (S) to one of the at least two of the predefined levels of centralization for inter-cell interference reduction ($c_g$) depending on the expected level of inter-cell interference in the area of inter-cell interference (AI) for the expected time frame by the network optimization unit (3).

9.  Network optimizing unit (3) for a mobile radio access network (1) wherein the mobile radio access network (1) comprises base stations (g) configured to operate in different levels of centralisation ($c_g$) of network functions (NF);
    **characterized in that**
    the network optimizing unit (3) is configured to

    - receive a path request message (4), requesting a provision of a path ( $\mathbb{X}_{AB}$ ) specifying a spatial and temporal progression from a point of origin ($p_A$) to a point of destination ($\mathbf{p_B}$) for an autonomously guided vehicle ($v$);

    - determine the path ( $\mathbb{X}_{AB}$ ) for the autonomously guided vehicle ($v$) according to a predefined optimization method;
    - determining sets (S) of the interfering base stations ($g$) of an area of inter-cell interferences (AI) along the path ( $\mathbb{X}_{AB}$ ) and a respective time frame, when the autonomously guided vehicle ($v$) is expected to be in the area of inter-cell interferences (AI) according to the path ( $\mathbb{X}_{AB}$ );

    - send a path message (5) comprising the path ( $\mathbb{X}_{AB}$ ) to the autonomously guided vehicle ($v$);
    - control the sets (S) of interfering base stations ($g$) to operate in a predefined level of centralization for inter-cell interference reduction ($c_g$) during the respective time frame of inter-cell interference.

10. A computer program product comprising program code for performing a method according to one of the claims 1 to 8.

11. A computer-readable storage medium comprising at least the computer program product according to claim 10.

12. Autonomously guided vehicle ($v$),
    **characterized in that**
    the autonomously guided vehicle ($v$) is configured to

    - send a path request message (4), requesting a provision of a path ( $\mathbb{X}_{AB}$ ) specifying a spatial and temporal progression from a point of origin ($\mathbf{p_A}$) to a point of destination ($\mathbf{p_B}$);

    - receive a path ( $\mathbb{X}_{AB}$ ) message (5) comprising the path ( $\mathbb{X}_{AB}$ ); and

    - move along the path ( $\mathbb{X}_{AB}$ ).

13. Radio network (1) comprising a network optimizing unit (3) according to claim 9.

FIG 1

EP 4 451 742 A1

FIG 2

EP 4 451 742 A1

# FIG 3

# FIG 4

Europäisches
Patentamt
European
Patent Office
Office européen
des brevets

# EUROPEAN SEARCH REPORT

**Application Number**

EP 23 16 8422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 703 412 A1 (HUAWEI TECH CO LTD [CN]) 2 September 2020 (2020-09-02) * paragraph [0003] – paragraph [0022] * * paragraph [0033] – paragraph [0078] * * figures * | 1-11,13 | INV. H04W40/20 ADD. H04W24/02 H04W36/38 H04W36/08 |
| Y | ALBA ALBERTO MARTINEZ ET AL: "Enabling Dynamically Centralized RAN Architectures in 5G and Beyond", IEEE TRANSACTIONS ON NETWORK AND SERVICE MANAGEMENT, IEEE, USA, vol. 18, no. 3, 8 April 2021 (2021-04-08), pages 3509-3526, XP011876120, DOI: 10.1109/TNSM.2021.3071975 * page 1 – page 17 * | 1-11,13 | |
| A | US 2019/253957 A1 (TOD ANTHONY WILLIAM [CA] ET AL) 15 August 2019 (2019-08-15) * paragraph [0003] – paragraph [0021] * * paragraph [0030] – paragraph [0090] * * figures * | 1-11,13 | |

**TECHNICAL FIELDS SEARCHED (IPC)**

H04W
H04L

The present search report has been drawn up for all claims

| Place of search | Date of completion of the search | Examiner |
|---|---|---|
| Munich | 29 September 2023 | Aguilar Cabarrus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt
European
Patent Office
Office européen
des brevets

**Application Number**

**EP 23 16 8422**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11, 13

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

The Search Division considers that the present European patent application does not comply with the requirements of unity of invention and relates to several inventions or groups of inventions, namely:

```
1. claims: 1-11, 13

      Invention I is directed to a network optimizing unit and a
      corresponding method in which the optimizing unit -
      determines a set (S) of interfering base stations (g) of an
      area of inter-cell interferences (AI) along the path (KAB )
      and a respective time frame, when the autonomously guided
      vehicle (v) is expected to be in the area of inter-cell
      interferences (AI) according to the path (KAB ); and-
      controls the interfering base stations (g) of the set (S) to
      operate in a predefined level of centralization for
      inter-cell interference reduction (c9 ) during the
      respective time frame of inter-cell interference.
                          ---


2. claim: 12

      Invention II is directed to a autonomously guided vehicle
      sending a path request and receiving a path message
      comprising the path specifying a spatial a spatial and
      temporal progression from a point of origin to a point of
      destination.
                          ---
```

## ANNEX TO THE EUROPEAN SEARCH REPORT
## ON EUROPEAN PATENT APPLICATION NO.

EP 23 16 8422

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2023

| Patent document cited in search report | | Publication date | Patent family member(s) | | Publication date |
|---|---|---|---|---|---|
| EP 3703412 | A1 | 02-09-2020 | CN | 109922483 A | 21-06-2019 |
| | | | EP | 3703412 A1 | 02-09-2020 |
| | | | US | 2020296617 A1 | 17-09-2020 |
| | | | WO | 2019114350 A1 | 20-06-2019 |
| US 2019253957 | A1 | 15-08-2019 | US | 2019253957 A1 | 15-08-2019 |
| | | | US | 2020288389 A1 | 10-09-2020 |
| | | | US | 2022322216 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- WiFi network planning and intra-network interference issues in large industrial warehouses. **PLETS, DAVID et al.** 2016 10th European Conference on Antennas and Propagation (EuCAP). IEEE, 2016
- Indoor planning optimization of ultra-dense cellular networks at high carrier frequencies. **LAMAS, SARAY RENILLA ; DAVID GONZALEZ ; JYRI HAMALAINEN.** 2015 IEEE Wireless Communications and Networking Conference Workshops (WC-NCW). IEEE, 2015
- **CHIWEWE, TAPIWA M., COLMAN F. MBUYA, GERHARD HANCKE.** Using cognitive radio for interference-resistant industrial wireless sensor networks: An overview. *IEEE Transactions on Industrial Informatics,* 2015, vol. 11 (6), 1466-1481
- **KPOJIME, HAROLD O. ; GHAZANFAR A. SAFDAR.** Interference mitigation in cognitive-radio-based femtocells. *IEEE Communications Surveys & Tutorials,* 2014, vol. 17 (3), 1511-1534
- **REN, YIJING ; VASILIS FRIDERIKOS.** Interference Aware Path Planning for Mobile Robots in mmWave Multi Cell Networks. *arXiv preprint arXiv:2207.02275,* 2022
- **TATINO, CRISTIAN ; NIKOLAOS PAPPAS ; DI YUAN.** Multi-robot association-path planning in millimeter-wave industrial scenarios. *IEEE Networking Letters,* 2020, vol. 2 (4), 190-194
- Path planning for aerial sensor networks with connectivity constraints. **LIU, XIUMING et al.** 2017 IEEE International Conference on Communications (ICC). IEEE, 2017